# EUROPEAN PATENT APPLICATION

(11) **EP 1 388 696 A1**
(43) Date of publication of application: **11.02.2004**
(21) Application number: 02425520.0
(22) Date of filing: 08.08.2002
(51) Int. Cl.: F16K 7/20, F16K 1/46, F16K 11/044

(54) **Valve assembly with a shutter for heating systems and water-heating apparatus**

(71) Applicant: Scanferla, Giorgio, 36061 Bassano del Grappa (VI) (IT)
(72) Inventor: Scanferla, Giorgio, 36061 Bassano del Grappa (VI) (IT)
(74) Representative: Bottero, Claudio

(57) **Abstract**

A valve assembly (1, 101) for heating systems and water-heating apparatuses, as well as a water-heating apparatus incorporating the same are described, comprising:
- a valve body (2) in which a fluid inlet conduit (3) and at least one fluid outlet conduit (4, 5) are formed;
- a shutter (7, 7') provided with a body (8, 8') made of a substantially undeformable material slidably mounted in the valve body (2), wherein it is reciprocable between a first and second position whereat it respectively closes and opens the fluid outlet conduit (4, 5), the shutter (7, 7') comprising a sealing element (47, 47') adapted to seal in a fluid-tight manner the fluid outlet conduit (4, 5) cooperating in abutting relationship with a respective valve seat (43, 6c) defined at an end of the conduit (4, 5); and
- means (30) for driving the shutter (7, 7'),
wherein the sealing element (47, 47') comprises a substantially lip-shaped portion radially extending from and being integral with a body (46, 46') made of an elastically deformable material received in a cavity (45, 45') defined in the body (8, 8') of the shutter (7, 7'), the substantially lip-shaped portion laterally protruding from said shutter (7, 7') for a portion of predetermined length.

## Description

### Field of the invention

The present invention refers to a valve assembly according to the preamble of claim 1.

In the following description and in the subsequent claims, the term 'fluid' is used to indicate any substance in liquid or gaseous form flowing through the valve assembly. Preferably, but not exclusively, reference shall be made hereinafter to water.

Such type of valve assembly allows to use a shutter which is shaped not only for allowing an on/off type operation, but also for a modulating operation, i.e. the valve is capable of regulating the flow rate of the fluid leaving the valve assembly.

More particularly, the valve assembly of the invention has a preferred, although not exclusive, use in heating systems and in household water-heating apparatuses, such as for example boilers of the so-called combined type.

For illustrating purposes, the valve assembly of the invention may also be used in burners of water-heating apparatuses to regulate the flow rate of combustible gas.

In the following the description and in the subsequent claims, the term 'boiler of the combined type' is used to indicate a boiler adapted to generate hot water for both space heating, or primary water, as well as hot water for sanitary use.

A valve assembly like that described above may be both of the two-way type if it comprises a single valve seat (arranged at a first position in the body of the valve assembly hereinafter referred to as first valve seat) and of the three-way type if, in addition to the first valve seat, it also comprises a further valve seat (arranged at a second position in the body of the valve assembly and hereinafter referred to as second valve seat).

### Prior art

In the field of domestic heating systems and appliances, and specifically in the field of gas-fired boilers, it is well known to use valve assemblies capable of cutting off (two-way valves) or diverting (three-way valves) the fluid flowing through the circuits provided therein.

It is also known that, regardless of their specific use, such valve assemblies should provide, on the one hand, the lowest pressure drop and, on the other hand, the absence of leakouts from the circuit which is isolated independently of the differential pressure existing upstream and downstream of the valve assembly and independently of the fluid used.

This in order to reduce the power required for the circulation pumps, as well as to ensure a proper distribution of the fluids in the circuit.

While several types of valve assemblies have long been available on the market, to date none is capable of fully meeting the dual requirements mentioned hereinabove within the cost limitations currently acceptable by the market.

A first type of known assembly is, for example, described in European patent application EP-A-0 907 046 and is represented by valve assemblies comprising a shutter essentially consisting of a cylindrical metallic body laterally provided with an annular gasket made of an elastically deformable material. The annular gasket is removably mounted in a respective receiving seat radially formed in the lateral wall of the metallic body.

The shutter is guided in a substantial mating engagement within a central sliding chamber of the shutter and is removably received with interference at the inner ends of the valve body of the fluid outlet conduit(s).

Therefore, in order to seal the fluid outlet conduit(s) in a fluid-tight manner during an operation of the on/off type of the valve assembly, it is necessary that the valve assembly has means for driving the shutter, typically comprising an electric motor capable of ensuring that the annular gasket of the shutter exerts a sufficient sealing effect on the inner walls of the fluid outlet conduit(s) in which the shutter is received with interference.

A first drawback of such a type of valve assembly is therefore related to the fact that the driving means is particularly expensive since, in order to ensure a fluid-tight seal of the at least one fluid outlet conduit, the valve assemblies must be capable of supplying sufficient power.

Moreover, the annular gasket made of an elastically deformable material, due to the inevitable dimensional changes to which the same is subjected (changes in turn linked to thermal expansions and/or to the expanding action exerted by the fluid), has the tendency to adhere to the walls of the central sliding chamber of the shutter, a tendency which can at most be reduced by treating such walls with suitable releasing agents, but which can never be completely eliminated. The adhesion of the annular gasket to the walls of the central sliding chamber of the shutter is responsible for rather high starting frictions which, in order to be overcome, require the use of an even more powerful electric motor, such as a motor capable of supplying about twice the power with respect to the power necessary to move the shutter in the absence of the aforementioned adhesion effects. Such adhesion effects are obviously increased when the annular gasket of the shutter is subjected to compression when received in the aforementioned fluid outlet conduit(s).

A second drawback of the aforementioned type of valve assembly is therefore related to the need to overcome such starting frictions, which further increases the cost of the means for driving the shutter and, with this, the overall cost of the valve assembly.

A second type of known valve assembly, such as for example is described in patent application EP-A-0 907 045, consists of valve assemblies in which a shutter entirely made of a suitably shaped elastic deformable material is arranged, which shutter nevertheless has the drawback of being particularly subjected to dimensional changes, typically positive, due to effects of thermal expansion and/or swelling caused by the fluid to be cut off and/or modulated. Any dimensional change of the shutter, in turn, implies an unacceptable variation, in the case of an operation of the modulating type, of the modulation characteristics.

### Summary of the invention

The technical problem underlying the present invention is therefore that of providing a valve assembly which allows to ensure both low pressure drops and the absence of leakouts from the circuit which is isolated, while overcoming the aforementioned drawbacks indicated with reference to the cited prior art, in particular those related to the cost of the means for driving the shutter and those related to the dimensional change thereof and to the ensuing effects on the modulation characteristics.

According to a first aspect of the invention, this problem is solved by a valve assembly for heating systems and water-heating apparatuses comprising:
- a valve body in which a fluid inlet conduit and at least one fluid outlet conduit are formed;
- a shutter provided with a body made of a substantially undeformable material slidably mounted in the valve body, wherein the shutter is reciprocable between a first and second position whereat it respectively closes and opens said at least one fluid outlet conduit, the shutter comprising a sealing element adapted to seal in a fluid-tight manner said at least one fluid outlet conduit cooperating in abutting relationship with a respective valve seat defined at an end of said at least one fluid outlet conduit; and
- means for driving the shutter,
characterised in that the sealing element comprises a substantially lip-shaped portion radially extending from and being integral with a body made of an elastically deformable material received in a cavity defined in the body of the shutter, the substantially lip-shaped portion laterally protruding from the shutter for a portion of predetermined length.

In the present description and in the subsequent claims, the term "substantially undeformable material" is used to indicate a material capable of withstanding both the fluids normally used in heating systems and possible temperature changes without appreciably altering its dimensional, geometric and mechanical characteristics.

In accordance with the invention, it is advantageously possible to achieve both the desired low pressure drops thanks to a suitable sizing of the shutter, and to ensure the required fluid-tight seal by positioning the sealing element of the shutter in abutting relationship against a valve seat (or two valve seats) arranged at the aforementioned first and second positions in the valve body.

Advantageously, moreover, the valve assembly of the invention allows to reduce the height of the shutter, i.e. the size along the sliding direction thereof (hereinafter, for the sake of simplicity: "axial direction"), thus minimising the pressure drops.

At the same time, it is advantageously possible to use high differential pressures between upstream and downstream of the valve assembly without the risk of undesired deformations of the shutter thanks to the fact that such pressures are supported by the body made of a substantially undeformable material.

Thanks to the fact that the sealing element comprises a substantially lip-shaped portion made of an elastically deformable material laterally protruding from of the body of the shutter and capable of cooperating in abutting relationship with the valve seat, the valve assembly of the invention also allows a reduction of the force necessary to actuate the shutter in the movement away from the valve seats. Thanks to such a reduction of the actuation force, it is therefore advantageously possible to reduce the power which the driving means must supply to move the shutter and, therefore, it is possible to use means for driving the shutter with a lower power and cost with respect to those of the prior art.

Moreover, thanks to the protective function carried out by the body of the shutter, the body made of an elastically deformable material is advantageously preserved from undesired effects of dimensional change since the portion of such body which is exposed to the fluid is suitably limited. Thanks to such features, the shutter has advantageously an improved dimensional stability and a prolonged useful life.

In other words, the valve assembly of the invention allows to achieve all the advantages obtainable by the valve assemblies of the prior art in which the shutter is entirely constituted by an elastically deformable material, such as the low cost and the simplicity of manufacture of the shutter, while overcoming the drawbacks of these valve assemblies of the known type. In particular, the valve assembly of the invention has the dual advantage of reducing the starting frictions and of preserving the shutter portions constituted by the body made of an undeformable material from dimensional changes with a limited additional cost, which is the cost attributable to the body made of a substantially undeformable material.

Moreover, as shall be better underlined hereinafter, the body made of an undeformable material may be advantageously shaped so as to have suitable modulating regions capable of ensuring a modulation curve which is stable in time.

Finally, as shall be better apparent hereinafter, by suitably sizing the body made of an elastically deformable material with respect to the cavity defined within the body of the shutter, it is advantageously possible to allow the body made of an elastically deformable material to expand preferentially at the portions positioned in a region distal with respect to the region in which the sealing element is positioned.

Preferably, at least one portion of the body of the shutter is provided with stop means adapted to maintain in position the body made of an elastically deformable material either by means of a thrust in the radial direction or by means of a thrust in the axial direction or by means of a combination of such thrusts.

In accordance with a preferred embodiment of the invention, the body of the shutter is substantially constituted by a hollow shell made of a substantially undeformable material and the aforementioned cavity for receiving the body made of an elastically deformable material is defined in such shell.

Preferably, the valve body comprises, at the aforementioned end of the outlet conduit, a flaring for facilitating the insertion of the shutter within the valve body, so as to facilitate the mounting of the shutter in the valve body.

In accordance with a preferred embodiment of the invention, the valve body comprises, at such end, abutment means adapted to cooperate in abutting relationship with the shutter and to prevent the release of the same from the valve body.

In this way, a stable association between the shutter and the valve body is obtained once the shutter has been mounted in the valve body through the flaring.

Preferably, the aforementioned abutment means comprises the valve seats, to the advantage of the construction simplicity of the valve body of the valve assembly of the invention.

Preferably, the body made of an elastically deformable material occupies a predetermined percentage of volume of the aforementioned cavity, percentage which can be determined by the man skilled in the art as a function of the type of material used to manufacture the body made of an elastically deformable material and of the type of fluid to be cut off and/or modulated. Therefore, as a function of such parameters, the man skilled in the art shall be able to determine the most suitable range of values of the percentage of volume of the cavity which the body made of an elastically deformable material must occupy. More specifically, the man skilled in the art shall be able to determine the minimum percentage below which the risk may occur that the sealing element completely shrinks within the cavity and the maximum percentage above which there is not sufficient space to allow, on the one hand, an adequate expansion of the body made of an elastically deformable material in operation and, on the other hand, a compression of the body made of an elastically deformable material which is sufficient to ensure the mounting of the shutter in the valve body.

The body made of an elastically deformable material is preferably compressed, to a predetermined degree of compression, in the axial direction, so as to leave respective spaces at the inner regions of the shell arranged in axially opposed directions, close to the inner walls of the shell, in a region distal with respect to the sealing element, for absorbing the dimensional increase of the body made of an elastically deformable material due to the absorption of the fluid (optionally containing additives which can worsen such absorbing action) or due to temperature increases. Also in this case, the degree of axial compression depends on the type of material used and on the type of fluid to be cut off and/or modulated.

The body made of an elastically deformable material is also preferably compressed, to a predetermined degree of compression, in the radial direction, i.e. in a direction substantially perpendicular to the axial sliding direction of the shutter, so as to exert an advantageous sealing action between the shutter and a stem for moving the same.

According to a preferred embodiment of the invention, the body of the shutter comprises a plurality of portions defining a lateral opening for the passage of the aforementioned substantially lip-shaped portion.

In this way, it is possible to arrange the body made of an elastically deformable material within the body of the shutter so that a first portion of the body made of an elastically deformable material is received within the aforementioned cavity, a second portion thereof is received in said opening and a third portion thereof (the substantially lip-shaped portion) protrudes outside of the body of the shutter for a portion of predetermined length.

Should the body of the shutter be constituted by a hollow shell, the latter preferably comprises two of said portions defining a lateral opening. Consequently, in this preferred embodiment, each of such portions is substantially shaped like a half-shell.

Still more preferably, the lateral opening for the passage of the substantially lip-shaped portion is formed at a center-line plane of the body of the shutter, so as to define a sealing region arranged at such center-line plane of the shutter.

In this way, it is advantageously possible to shape the body of the shutter so as to define, in accordance with a preferred embodiment of the invention better defined hereinafter, a modulating region distinct from the sealing region and arranged on axially opposed sides with respect to the aforementioned center-line plane of the body of the shutter.

Preferably, the valve assembly of the invention further comprises fixing means for fixing each of the aforementioned portions of the body of the shutter to a respective movement stem.

Advantageously, the shutter is thus stably fixed to the movement stem.

For illustrative purpose, such fixing means may comprise a recess adapted to house a stop ring for the stable fixing of the shutter to the stem, or an inner threading formed in an opening of the body of the shutter in threaded engagement with a corresponding outer threading provided on the movement stem.

Preferably, the body made of an elastically deformable material is partially received in the hollow shell with a certain interference in a region proximal to the aforementioned lateral opening, whereas the same is preferably partially received in the hollow shell somehow loosely in a region distal with respect to the aforementioned lateral opening, so as to be able to expand freely preferably in such distal region.

Preferably, the substantially lip-shaped portion comprises a pair of walls inclined in directions forming a predetermined angle with respect to the center-line plane of the body made of an elastically deformable material and connected by a joining wall arranged in a direction substantially perpendicular to the center-line plane of the body made of an elastically deformable material. Still more preferably, the inclined walls and the joining wall of the substantially lip-shaped portion are substantially rectilinear.

Preferably, the angle formed by the inclined walls of the substantially lip-shaped portion with respect to the center-line plane of the body made of an elastically deformable material is between about 30° and about 60° and, still more preferably, is equal to about 45°.

In accordance with a preferred embodiment of the valve assembly of the invention, the substantially lip-shaped portion cooperates in abutting relationship with the at least one valve seat and, still more preferably, cooperates in abutting relationship at the aforementioned at least one fluid inlet conduit.

Still more preferably, the at least one valve seat is arranged at a predetermined distance from the walls of the fluid inlet conduit, in such a way that the shutter, once positioned at the at least one valve seat; does not interfere with the flowpath defined within the valve body and the pressure drops can thus be advantageously minimised.

Preferably, the substantially lip-shaped portion cooperates in abutting relationship with the at least one valve seat along a sealing direction forming a predetermined angle, preferably between about 30° and about 60°, with the movement direction of the shutter and, still more preferably, equal to about 45°.

In accordance with a preferred embodiment of the valve assembly of the invention, the shutter further comprises a modulating region, distinct from the aforementioned sealing region, intended to progressively close the at least one fluid outlet conduit so as to allow a modulation of the flow rate of the fluid flowing out from the at least one fluid outlet conduit.

In this way, the valve assembly of the invention can advantageously operate both as an on/off type valve and as a modulating valve.

Preferably, the modulating region comprises at least one lateral portion of the body of the shutter, so that such region has advantageous characteristics of dimensional stability, which is particularly desirable for the purpose of a precise modulating action of the fluid.

A suitable design of the shutter allows to obtain the most suitable profile for an optimal regulation of the flow rate as a function of the position of the shutter with respect to the mouthpiece of the fluid outlet conduit(s).

Thus, according to a preferred embodiment of the valve assembly of the invention, at least one lateral portion of the body of the shutter may be substantially frusto-conical or curvilinear (i.e. parabolic or, respectively, spherical) as a function of the kind of desired regulation.

In accordance with a preferred embodiment of the invention, the substantially undeformable material is a metallic material and, still more preferably, is selected from the group comprising: brass, stainless steel, copper and bronze.

Preferably, the body made of an elastically deformable material is made of a material selected from the group comprising: acrylonitrile rubber (NBR), hydrogenated acrylonitrile rubber (HNBR), polychloroprene (CR), fluorinated rubber (FP), ethylenepropylene copolymers (EPM) and ethylene-propylene-diene terpolymers (EPDM).

In accordance with a preferred embodiment, the valve body comprises a substantially cylindrical central sliding chamber including at least one portion having a diameter substantially equal to the maximum diameter of the shutter measured at the sealing element.

In this way, undesired interferences between the sealing element and the valve body are advantageously avoided during the movement of the shutter from the closed position to the opened position of the at least one fluid outlet conduit.

The valve assembly of the invention may be a two-way or a three-way valve assembly.

In the first case, the shutter is driven by its driving means away from and towards a single fluid outlet conduit which is opened and, respectively, closed, thereby, thus cutting off the single flowpath defined in the valve body.

In the second case, the shutter opens and, respectively, closes a pair of fluid outlet conduits, thus alternately directing the fluid into one of a pair of flowpaths defined in the valve body.

When the valve assembly is a three-way valve assembly, the end portion of the central sliding chamber of the shutter defining the second valve seat is therefore preferably formed upstream of a second fluid outlet conduit.

Preferably, the means for driving the shutter comprises linear actuator means acting upon the stem fixed to the shutter and operated by an electric motor.

Such means is mechanically simple and inexpensive, which results in an advantageous containment of the risk of failure.

Preferably, the linear actuator means comprises a shaft provided with at least one threaded portion, the thread pitch of which is irreversible. In this way, the shutter can advantageously be kept in the respective valve seat without having to keep the motor in an excited state. This allows to use a simple and inexpensive motor and to reduce the energy consumption.

Furthermore, by using linear actuator means equipped with an electric step-by-step motor, a modulating valve, that is a valve capable of regulating the flow rate of the fluid leaving the valve assembly, can be produced at a very low cost.

Alternatively, the linear actuator means may comprise a shaft provided with at least one threaded portion having a reversible pitch, provided care is taken to block the shutter by supplying direct current, or blocking current, of a suitable value, to at least one stator winding of the electric motor.

Preferably, the linear actuator means comprises a shaft provided with a fork head adapted to removably receive a spherical tailpiece formed at a free end of the stem.

In a preferred embodiment, moreover, the valve assembly of the invention further comprises a plug mounted in a fluid-tight manner in the valve body and in which the stem of the shutter is slidably guided.

Advantageously, the plug is adapted to isolate in a fluid-tight manner the means for driving the shutter, which are therefore structurally separate from the water circuit. In this way, it is possible to carry out maintenance interventions on the electrical or mechanical part of such means without necessarily having to open the valve and, that is, without having to empty the system.

In accordance with a further aspect of the invention, a shutter for a valve assembly for heating systems and water-heating apparatuses as defined in attached claim 18 is provided.

Finally, the present invention provides a method for manufacturing such shutter as defined in attached claim 28, as well as a water-heating apparatus for generating hot water for sanitary use and/or for space heating characterised in that it comprises a valve assembly as defined above.

### Brief description of the drawings

Additional features and advantages of the invention will be more clearly apparent from the following description of some preferred embodiments of a valve assembly according to the invention, given by way of non-limitative example with reference to the accompanying drawings. In such drawings:
- Figure 1 is a longitudinal cross section of a three-way valve assembly according to the present invention, shown in a first operating position;
- Figure 2 is a longitudinal cross section schematically showing a detail of the valve assembly of Figure 1, in a second operating position;
- Figure 3 is a longitudinal cross section of a two-way valve assembly according to the present invention, shown in a first operating position;
- Figure 4 is a longitudinal cross section schematically showing a detail of the valve assembly of Figure 3, in a second operating position; and
- Figure 5 is a longitudinal cross section of an alternative embodiment of a shutter according to the invention.

### Detailed description of preferred embodiments

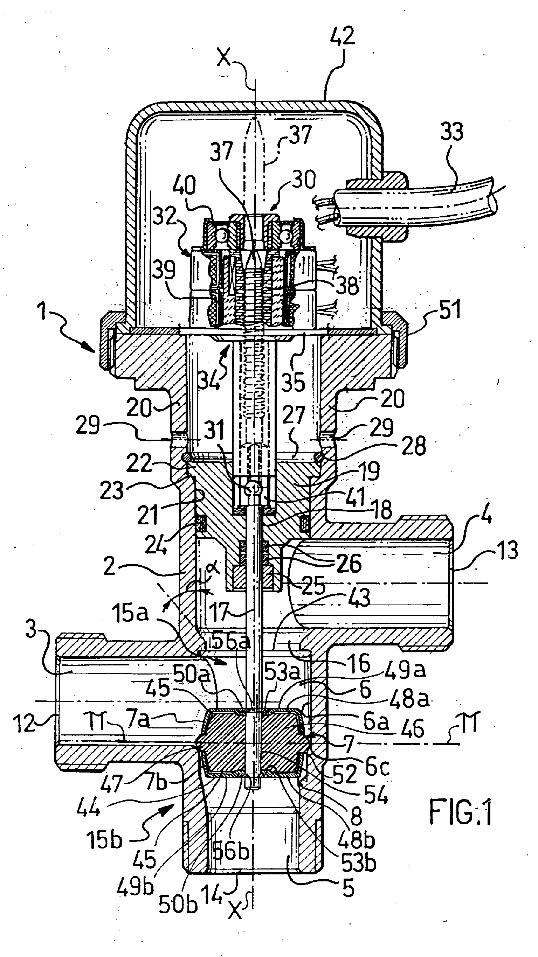

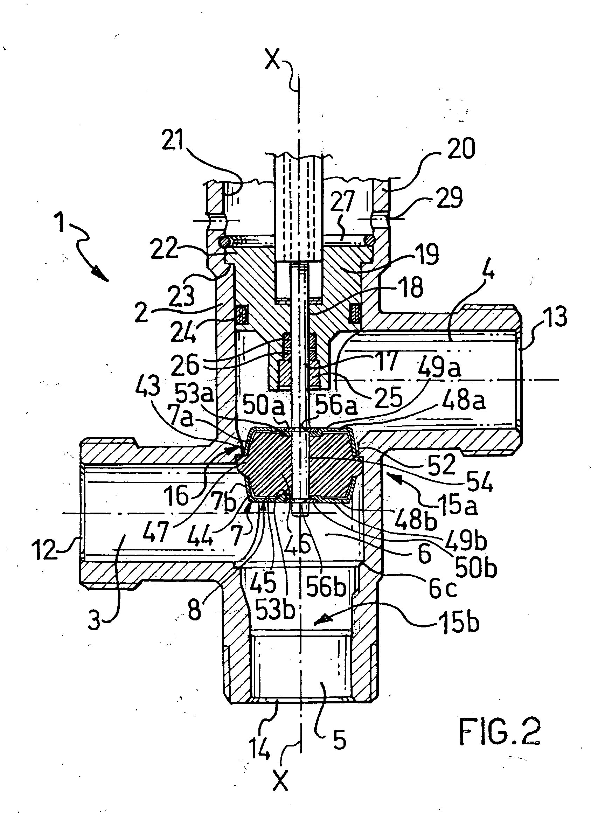

With reference to Figures 1 and 2, a valve assembly according to a first embodiment of the invention is generally indicated at 1. In particular, the valve assembly 1 is a three-way valve intended to be mounted in household water-heating apparatuses, such as for example gas-fired boilers.

The valve assembly 1 comprises a valve body 2 in which a fluid inlet conduit 3, a first fluid outlet conduit 4 and a second fluid outlet conduit 5 are formed.

In accordance with the preferred embodiment illustrated in the aforementioned figures, a fluid inlet opening 12 is provided at the mouthpiece of the fluid inlet conduit 3, while a first 13 and a second 14 fluid outlet openings are formed downstream of the fluid outlet conduits 4 and, respectively, 5.

In addition to the valve body 2, in accordance with the invention, the valve assembly 1 comprises:
- a shutter 7 provided with a body 8 made of a substantially undeformable material slidably mounted in the valve body 2, wherein the shutter 7 is reciprocable between a first and second position whereat it closes and, respectively, opens the fluid outlet conduits 4, 5; and
- means 30 for driving the shutter 7, illustrated in greater detail hereinafter.

As shown in figures 1 and 2, the shutter 7 is advantageously sized so as not to interfere with the flowpath within the valve body 2, so as to minimise the pressure drops.

In accordance with the invention, the shutter 7, in turn, comprises a sealing element 47 adapted to close in a fluid-tight manner the fluid outlet conduits 4, 5 cooperating in abutting relationship with respective valve seats 43, 6c defined in the valve body 2 at respective inner ends of such conduits 4, 5.

The shutter 7 is intended to abut - in the aforementioned first and second position whereat it closes and, respectively, opens the fluid outlet conduits 4, 5 - against such valve seats 43, 6c called, for the sake of simplicity, first valve seat 43 and, respectively, second valve seat 6c, so as to exert a sealing action against the fluid.

More specifically, in accordance with the illustrated preferred embodiment, the first valve seat 43 is defined at an opening 16 adapted to put the fluid inlet conduit 3 in fluid communication with the fluid outlet conduit 4.

The second valve seat 6c, on the other hand, is defined at an inner end of the fluid outlet conduit 5.

Preferably, the abutment means constituted by the first and second valve seat 43, 6c is bevelled, so as not to damage the sealing element 47.

The aforementioned opening 16 is preferably flared on the opposite side of the valve seat 43 for facilitating the insertion of the shutter 7 within the valve body 2.

Preferably, such flaring is inclined at a predetermined angle α, still more preferably equal to about 15°, with respect to a direction X-X of axial movement of the shutter 7.

In accordance with the preferred embodiment illustrated in figures 1 and 2, the valve body 2 further comprises a substantially cylindrical central chamber 6 for the sliding of the shutter 7. In greater detail, the central chamber 6, formed in the valve body 2 between the fluid inlet conduit 3 and the fluid outlet conduits 4, 5, has a diameter slightly greater than the maximum diameter of the shutter 7 measured at the sealing element 47, so that there are no undesired interferences nor adhesion effects between the walls of such central chamber 6 and the sealing element 47.

According to the illustrated embodiment of the valve assembly 1, therefore, the shutter 7 is slidably mounted in the central chamber 6, after insertion of the same through the opening 16, whereby the shutter 7 is reciprocable, according to a substantially rectilinear path, between the first and second valve seat 43, 6c.

In accordance with the illustrated embodiment, therefore, inside the valve body 2 are defined:
i) a first flowpath 15a, extending between the fluid inlet opening 12 and the first fluid outlet opening 13, comprising the fluid inlet conduit 3, the central chamber 6 and the first fluid outlet conduit 4;
ii) a second flowpath 15b, extending between the fluid inlet opening 12 and the second fluid outlet opening 14, comprising the fluid inlet conduit 3, the central chamber 6 and the second fluid outlet conduit 5.

In accordance with the invention, the sealing element 47 comprises a substantially lip-shaped portion radially extending from a body 46 made of an elastically deformable material received in a cavity 45 defined in the aforementioned body 8 of the shutter 7, the substantially lip-shaped portion laterally protruding from the shutter 7 for a portion of predetermined length.

Thanks to the supporting action exerted by the body 8 of the shutter 7 on the sealing element 47, the shutter 7 is advantageously able to resist the thrust exerted on the sealing element 47 when the latter is thrusted by the driving means 30 against the first valve seat 43 or against the second valve seat 6c.

In the preferred embodiment illustrated in figures 1 and 2, the body 8 of the shutter 7 is substantially constituted by a hollow shell 44 made of a substantially undeformable material and the cavity 45 for receiving the body 46 made of an elastically deformable material is defined in the shell 44.

For purely illustrative purpose, the hollow shell 44 made of a substantially undeformable material is made of a metallic material, such as for example brass, for example by moulding, whereas the body 46 made of an elastically deformable material is preferably made of acrylonitrile rubber (NBR).

A central through hole 54, intended to receive a stem 17 for moving the shutter 7, is axially formed in the body 46 made of an elastically deformable material.

Moreover, according to the illustrated preferred embodiment, the body 46 made of an elastically deformable material occupies a predetermined percentage of the volume of the cavity 45, so that, on the one hand, the substantially lip-shaped sealing element 47 can partially shrink into the shell 44 during the mounting of the shutter 7 in the valve body 2 and, on the other hand, so that the body 46 made of an elastically deformable material can advantageously have a space sufficient for the expansion due to thermal effects and/or to the expanding action of the fluid on the elastically deformable material.

For purely illustrative purpose, in the illustrated preferred embodiment, in which the body 46 made of an elastically deformable material is made of NBR and the fluid to be cut off and/or modulated is water, the body 46 made of an elastically deformable material preferably occupies about 70% of the volume of the cavity 45.

As illustrated in figures 1 and 2, the body 8 of the shutter 7 preferably comprises a plurality of portions, in the illustrated example two portions substantially shaped like half-shells 48a, 48b (hereinafter, for the sake of simplicity, referred to half-shells), defining a lateral opening 52 for the passage of the aforementioned substantially lip-shaped portion. This opening 52, in the preferred embodiment illustrated in the aforementioned figures, is formed at a center-line plane II of the shell 44.

Thus, when the sealing element 47 of the shutter 7 abuts against the valve seat 6c, the latter exerts upon the former a thrust which is advantageously partially absorbed by the half-shell opposite to the seat 6c, that is, in the case illustrated in figure 1, by the half-shell 48a. Similarly, when the sealing element 47 of the shutter 7 is positioned against the valve seat 43, the latter exerts upon the former a thrust which is advantageously partially absorbed by the half-shell opposite to the seat 43, that is, in the case illustrated in figure 2, by the half-shell 48b.

In accordance with the illustrated embodiment, the portion of the body 8 of the shutter 7 arranged in the proximity of the aforementioned opening 52 is provided with stop means - in such a case constituted by the free ends of the half-shells 48a, 48b - adapted to maintain in position the body 46 made of an elastically deformable material by acting in the axial direction and clamping the sealing element 47 in a jaw-like manner.

Preferably, the valve assembly 1 further comprises fixing means for fixing each half-shell 48a, 48b to the stem 17 for moving the shutter 7. In accordance with the illustrated preferred embodiment, such fixing means comprises a recess adapted to house a respective stop ring for the fixing of the shutter 7 to the stem 17 for moving the shutter 7. As illustrated in figures 1 and 2, more specifically, each of the half-shells 48a, 48b is preferably provided with such recess, respectively indicated at 53a, 53b, adapted to house a respective stop ring 50a, 50b.

In this way, any risk of undesired displacements of the shutter 7 along the stem 17, to which the shutter 7 can be fixed in a way conventional *per se,* not illustrated, is advantageously substantially eliminated, after the insertion of the stem 17 in the shell 44 through a pair of stem insertion holes 56a, 56b provided in the shell 44.

The body 46 made of an elastically deformable material is preferably partially received in the hollow shell 44 with a certain interference in a region proximal to the lateral opening 52, in such a way that the sealing element 47 can be still better supported by the half-shells 48a, 48b, whereas the same is partially received in the hollow shell 44 somehow loosely in a region distal with respect to the lateral opening 52, in such a way that the body 46 can expand freely preferably in such region.

More specifically, the body 46 made of an elastically deformable material is preferably compressed, to a predetermined degree of compression, in the axial direction, so as to leave respective spaces at the inner walls of the half-shells 48a, 48b.

Moreover, the body 46 made of an elastically deformable material is also preferably compressed, to a predetermined degree of compression, in the radial direction, so as to exert an advantageous sealing action between the shutter 7 and the stem 17 for moving the same.

In the illustrated preferred embodiment, therefore, the body 46 is compressed both in the axial direction and in the radial direction, so as to simultaneously obtain the aforementioned effects.

The substantially lip-shaped portion belonging to the sealing element 7 comprises, in accordance with the illustrated preferred embodiment, a pair of walls inclined in directions forming a predetermined angle with respect to the aforementioned center-line plane of the body 46 made of an elastically deformable material and connected by a joining wall, preferably rectilinear, arranged in a direction substantially perpendicular to such center-line plane.

In the preferred embodiment illustrated in figures 1 and 2, such angle of inclination of the pair of walls is equal to about 45° with respect to the center-line plane of the body 46.

The substantially lip-shaped portion of the sealing element 47 is intended to cooperate in abutting relationship with the aforementioned valve seats 43, 6c. More specifically, according to the illustrated embodiment of the valve assembly 1, the substantially lip-shaped portion cooperates in abutting relationship with the valve seats 43, 6c along a sealing direction forming an angle equal to about 45° with the direction X-X of movement of the stem 17.

Thanks to the inclination of the valve seats 43, 6c, in the illustrated embodiment equal to about 90° with respect to the direction X-X of movement of the stem 17, the shutter 7, in particular the sealing element 47 thereof, can advantageously cooperate in abutting relationship with such seats ensuring the necessary fluid-tight seal.

In accordance with the illustrated preferred embodiment, the shutter 7 further comprises a modulating region, distinct from the sealing region, intended to progressively close the fluid outlet conduits 4, 5 so as to allow a modulation of the flow rate of the fluid flowing out from such conduits 4, 5.

Advantageously, the sealing region of the shutter 7 is structurally separated from the modulating region intended to progressively close the fluid outlet conduits 4 or 5.

Preferably, the modulating region comprises at least one lateral portion of the body 8 and, more precisely, in accordance with the illustrated preferred embodiment, a pair of lateral portions 7a, 7b of the half-shell 48a and, respectively, of the half-shell 48b. In this way, the modulating region is made of a substantially undeformable material, thus allowing to obtain modulation characteristics which are constant in time.

More specifically, the lateral portions 7a, 7b are respectively joined to opposite upper and lower faces 49a, 49b of the shell 44.

In the present description, the expression "face of the shell 44" is used to indicate the portion thereof arranged substantially parallel to the center-line plane of the shell 44.

For example, in accordance with the illustrated preferred embodiment, the modulating region comprises substantially curvilinear lateral portions 7a and 7b (in this specific case having a parabolic profile), so as to carry out, as shall be more clearly apparent hereinafter, an advantageous regulation of the flow rate of the fluid flowing through the valve assembly 1.

In the proximity of the openings 12, 13 and 14, the fluid inlet and outlet conduits 3, 4 and 5 are externally threaded in order to couple, in a way conventional *per se,* for example by screwing, with the ends of threaded fittings (not illustrated) of respective water circuits, which are also not illustrated.

In the illustrated preferred embodiment, the stem 17 is slidably guided in a corresponding hole 18 axially formed in a plug 19 mounted in a fluid-tight manner in a cylindrical tubular portion 20 integrally formed with the valve body 2. The plug 19 is received in a hole 21 axially formed in the cylindrical tubular portion 20 and is provided with a flange 22 adapted to cooperate in abutting relationship with an annular abutment surface 23 made inside the hole 21. An annular sealing gasket 24 is placed between the plug 19 and the valve body 2.

In order to facilitate the sliding of the stem 17, the plug 19 is provided with a ferrule 25 made of a suitable anti-friction material housed in a respective annular seat coaxially formed in the hole 18.

A pair of annular sealing gaskets 26, mounted next to the ferrule 25, finally ensures the necessary seal upon the stem 17 avoiding undesired leakouts of fluid.

In order to ensure the correct positioning of the plug 19, a ring 27 is mounted in a respective annular seat 28 formed inside the hole 21.

Above such seat 28, the cylindrical tubular portion 20 has a plurality of radial holes, all indicated at 29, circumferentially arranged and equally spaced from one another, adapted to drain the cylindrical tubular portion 20 of any fluid which may have leaked through the plug 19.

As already stated, the valve assembly 1 further comprises means 30 for driving the shutter 7, adapted to drive the displacement of the shutter 7 within the central chamber 6 and arranged to act on a spherical tailpiece 31 formed at the free end of the stem 17.

Thanks to the design of the shutter 7 of the invention, driving means 30 which is capable of generating a power substantially lower than the power necessary to drive the valve assemblies of the prior art may advantageously be used, since a lower power is sufficient to ensure a quick detachment of the shutter 7 from the valve seats 43 and 6c.

The driving means 30 is mounted in the cylindrical tubular portion 20 and comprises an electric motor 32, powered in a way known *per se* by an electric supply cable 33, which acts on linear actuator means 34. In particular, the electric motor 32 is mounted on a plate 35 fixed to the free end of the cylindrical tubular portion 20 by means of a threaded ring nut 51 of the conventional type.

The linear actuator means 34 in turn comprises a shaft 37 provided with a threaded portion in threaded engagement with an internally threaded metal core 38, preferably made of plastic, located within the windings 39 of the electric motor 32 and rotated thereby. This rotation is guided by a roll bearing 40 mounted at the top of the motor 32.

In accordance with a preferred embodiment, the threaded portion of the shaft 37 has an irreversible pitch thread.

The shaft 37 is provided, at its lower end, with a fork head 41 adapted to receive the spherical tailpiece 31 of the stem 17, so that the stem 17 can be removably associated to the linear actuator means 34.

Advantageously, the coupling between the stem 17 and the linear actuator means 34 is of reversible type: in fact, in order to release the stem 17 from the fork head 41, it is sufficient to laterally pull the spherical tailpiece 31.

The electric motor 32 and the threaded portion of the shaft 37 protruding out of the cylindrical tubular portion 20 are advantageously protected by a box-type cover 42 snap-fitted onto the cylindrical tubular portion 20.

The operation of the valve assembly 1 described above allows to selectively deliver the fluid to the water circuits associated to the first or second flowpaths 15a, 15b.

In order to deliver the fluid to the water circuit associated to the first flowpath 15a, the shutter 7 is positioned at the second valve seat 6c so as to abut against the latter according to a sealing direction inclined at about 45° with respect to the direction X-X of movement of the shutter 7. In this way, the shutter 7 closes the fluid outlet conduit 5 (see Figure 1).

The fluid incoming into the valve assembly 1 through the fluid inlet opening 12 will then flow along the first flowpath 15a and through the outlet opening 13 to the first water circuit associated thereto.

Advantageously, the limited height of the shutter 7 allows to minimise the pressure drops which the fluid undergoes while flowing through the valve assembly 1.

In order to deliver the fluid into the water circuit associated to the flowpath 15b, it is necessary to shift the shutter 7 into a second working position, such as that shown in figure 2.

In the displacement from the first to the second working position, the shutter 7 follows a substantially rectilinear path within the central chamber 6.

The displacement of the shutter 7 is produced by exciting the windings 39 of the electric motor 32 with a supply current. Such exciting current produces a magnetic field such as to rotate the core 38 which, in turn, causes a simultaneous translational movement of the shaft 37, the threaded portion of which is in threaded engagement with the core. This results in vertical translation of the stem 17 associated to the shutter 7.

Advantageously, thanks to the design of the lateral portion 7a of the shell 44 and of the joining portion between such portion with the upper face 49a of the shell 44, it is possible to obtain - as the shutter 7 approaches its valve seat 43 - a regulation of the flow rate of the fluid flowing along the flowpath 15a from the maximum value to a zero value, including the whole range of intermediate values.

In such position, the shutter 7 abuts against the first valve seat 43 and completely closes the opening 16, thus cutting off the flowpath 15a.

The fluid incoming into the valve assembly 1 through the fluid inlet opening 3 will then flow along the second flowpath 15b and through the second outlet opening 5 to the second water circuit associated thereto.

Similarly to what has been previously described, the positioning of the shutter 7 substantially outside of the second flowpath 15b contributes to keep at a very low value the pressure drops which the fluid undergoes while flowing through the valve assembly 1.

In order to deliver again the fluid into the water circuit associated to the flowpath 15a, it is necessary to shift the shutter 7 bringing back the same to the first working position illustrated in figure 1.

For this purpose, it is sufficient to reverse the current flow through the windings 39 and, along therewith, the direction in which the metal core 38 is rotated.

In a similar way to what has been previously described, thanks to the design of the lateral portion 7b of the shell 44 and of the joining portion between such portion and the lower face 49b of the shell 44, it is possible to obtain - as the shutter 7 approaches to the second valve seat 6c - a regulation of the flow rate of the fluid flowing along the flowpath 15b from the maximum value to a zero value, including the whole range of intermediate values.

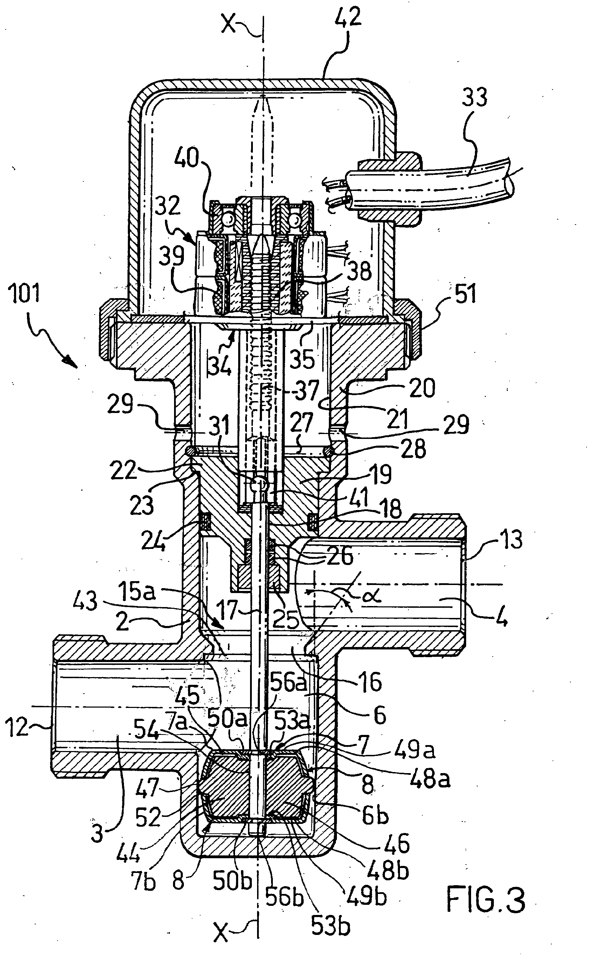

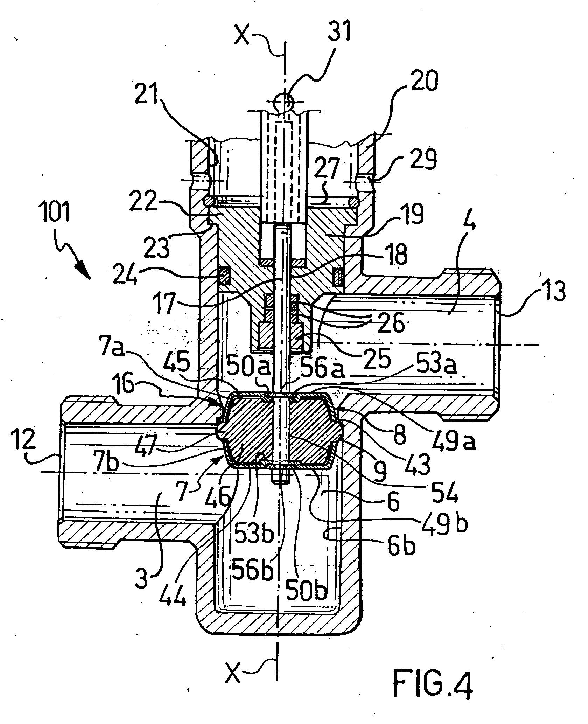

Figures 3 and 4 illustrate a further embodiment of the invention, in particular a two-way valve 101 intended, for illustrative purpose, to be mounted upstream of a burner for modulating the flow rate of combustible gas fed thereto.

In the following description and in such figures, the elements of the valve 101 which are structurally or functionally equivalent to those previously illustrated with reference to the three-way valve 1 shown in figures 1 and 2 will be indicated by the same reference numerals and will not be further described.

In the embodiment illustrated in figures 3 and 4, it is provided only the flowpath 15a extending between the fluid inlet opening 12 and the fluid outlet opening 13, comprising the fluid inlet conduit 3, the central chamber 6 and the first fluid outlet conduit 4.

The aforementioned central chamber 6 is substantially cylindrical, has a constant diameter which is slightly greater than the maximum diameter of the shutter 7 and is closed at an end portion distal thereof with respect to the fluid outlet conduit 4.

Here again, the shell 44 comprises two half-shells 48a, 48b defining, in a lateral portion of the shell 44, a lateral opening 52 for the passage of the aforementioned substantially lip-shaped portion formed, in the embodiment illustrated in figures 3 and 4, at a center-line of the shell 44.

It is also provided a modulating region comprising at least a part of a lateral portion of the hollow shell 44 of the shutter 7. For example, in accordance with the illustrated preferred embodiment, the modulating region comprises substantially curvilinear lateral portions 7a and 7b (in this specific case both having a parabolic profile), so as to carry out an advantageous regulation of the flow rate of the fluid flowing through the valve assembly 101.

The operation of the two-way valve assembly 101 allows a regulation of the flow rate of gas flowing along the flowpath 15a from the maximum value to a zero value, including the whole range of intermediate values, and this by driving the shutter 7 by means of the linear actuator means 34 in a way completely similar to what has been previously described.

It should be noted that in this case the provision of a limited height of the shutter 7 and of a portion 6b of the central chamber 6 adapted to receive said shutter 7 in a stop position substantially outside of the flowpath 15a advantageously allows to minimise the pressure drops which the fluid undergoes while flowing through the valve assembly 101.

Now a method according to the invention for manufacturing the shutter 7 previously illustrated shall be described.

In an initial step of the method of the invention, the body 46 made of acrylonitrile rubber (NBR) is provided. The central through hole 54 intended to receive the stem 17 is formed in the body 46 made of NBR, which is obtainable by means of conventional moulding operations.

Then, the stem 17 for moving the shutter 7 is associated to the body 46 made of NBR at the aforementioned through hole 54.

In a subsequent step of the method of the invention, the two half-shells 48a, 48b, made of brass in a way conventional per se, for example by moulding, are provided, the half-shells 48a, 48b being provided with a recess adapted to define the cavity 45 in the body 8 of the shutter 7.

Subsequently, the body 46 made of NBR is inserted into the cavity 45 and is subjected to compression both in the axial direction and in the radial direction, as illustrated above. Finally, the half-shells 48a, 48b thus prepared are associated to the body 46 made of NBR and to the stem 17, while keeping the body 46 in compression along both axial and radial directions.

Advantageously, in this way, on the one hand, respective free spaces capable of allowing the free expansion of the body 46 are left at a region distal with respect to the sealing element 47, and, on the other hand, an advantageous mechanical connecting action is exerted between the body 46 and the stem 17.

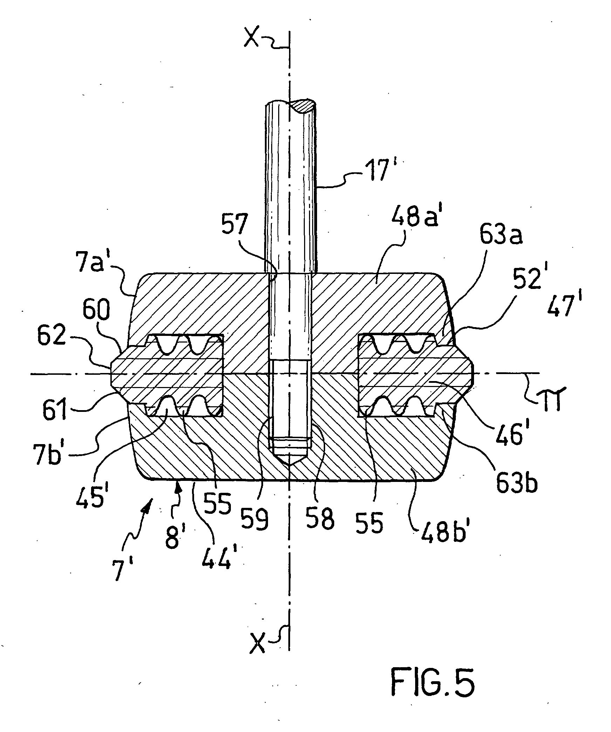

Figure 5 represents an alternative embodiment of a shutter according to the invention, generally indicated in such figure at 7'. Similarly to the previous preferred embodiment illustrated in figures 1-4, the shutter 7' comprises a body 8' and a sealing element 47' including a substantially lip-shaped portion radially extending from and being integral with a body 46' made of an elastically deformable material laterally protruding from the body 8' for a portion of predetermined length. The body 46' made of an elastically deformable material, preferably substantially annular, is received in a cavity 45' defined in the body 8' of the shutter 7'.

According to the preferred embodiment of figure 5, the body 8' is obtained, instead of by moulding, by turning. Moreover, the substantially annular body 46' made of an elastically deformable material comprises, at the axially opposite faces thereof, a plurality of ribs 55 which allow the body 46' to expand when the same is inserted into the cavity 45'.

Moreover, in order to allow the fixing of the body of the shutter to the movement stem 17', a hole 57 for the insertion of the stem 17' in the body 8', as well as fixing means comprising, in the preferred embodiment illustrated in figure 5, an inner threading 58 of the body 8' in threaded engagement with a corresponding outer threading 59 provided on the stem 17', are provided.

Finally, in accordance with the embodiment illustrated in figure 5, the portion of the body 8' of the shutter 7' arranged in proximity of the opening 52' is further provided with stop means, indicated at 63a, 63b, which is adapted to maintain in position the body 46' made of NBR by means of an abutment engagement in the radial direction with the radially outer rib 55 and/or by means of an action in the axial direction so as to clamp the sealing element 47' in a jaw-like manner.

The numerous advantages afforded by the valve assembly of this invention can be readily appreciated in the light of the foregoing description.

A first important advantage is represented by the fact that the design of the shutter reduces the starting frictions between the same and the valve seats, thus allowing the use of driving means which is less powerful and less expensive with respect to that used in valves of the known type, drastically cutting down the manufacturing costs of the valve.

A second advantage is represented by the fact that, by suitably shaping the body made of an undeformable material so as to obtain, in addition to a sealing region, a modulating region not subject to dimensional changes, the valve assembly of the invention is able of ensuring that the modulation curve is stable in time and does not undergo undesired variations.

A third advantage is represented by the fact that the shutter comprises a body made of an elastically deformable material preserved from the undesired effects due to thermal variations and/or to the expanding action of the fluid to be cut off and/or modulated thanks to the fact that the surface exposed to the fluid of such body made of an elastically deformable material is advantageously reduced thanks to the protective action exerted on the surface by the body of the shutter.

## Claims

1. A valve assembly (1, 101) for heating systems and water-heating apparatuses comprising:
- a valve body (2) in which a fluid inlet conduit (3) and at least one fluid outlet conduit (4, 5) are formed;
- a shutter (7, 7') provided with a body (8, 8') made of a substantially undeformable material slidably mounted in said valve body (2), wherein the shutter (7, 7') is reciprocable between a first and second position whereat it respectively closes and opens said at least one fluid outlet conduit (4, 5), said shutter (7, 7') comprising a sealing element (47, 47') adapted to seal in a fluid-tight manner said at least one fluid outlet conduit (4, 5) cooperating in abutting relationship with a respective valve seat (43, 6c) defined at an end of said at least one fluid outlet conduit (4, 5); and
- means (30) for driving the shutter (7, 7'),
**characterised in that** said sealing element (47, 47') comprises a substantially lip-shaped portion radially extending from and being integral with a body (46, 46') made of an elastically deformable material received in a cavity (45, 45') defined in the body (8, 8') of said shutter (7, 7'), said substantially lip-shaped portion laterally protruding from said shutter (7, 7') for a portion of predetermined length.

2. The valve assembly (1,101) according to claim 1, wherein the body (8, 8') of the shutter (7, 7') is substantially constituted by a hollow shell (44, 44') made of a substantially undeformable material and wherein said cavity (45, 45') for receiving the body (46, 46') made of an elastically deformable material is defined in said shell (44, 44').

3. The valve assembly (1,101) according to claim 1, wherein said valve body (2) comprises, at said end of the at least one outlet conduit (4, 5), a flaring for facilitating the insertion of the shutter (7, 7') in the valve body (2).

4. The valve assembly (1,101) according to claim 1 or 3, wherein said valve body (2) comprises, at said end of the at least one outlet conduit (4, 5), abutment means adapted to cooperate in abutting relationship with the shutter (7, 7') and to prevent the release thereof from the valve body (2).

5. The valve assembly (1,101) according to claim 4, wherein said abutment means comprises said valve seats (43, 6c).

6. The valve assembly (1,101) according to claim 1, wherein said body (46, 46') made of an elastically deformable material occupies a predetermined percentage of the volume of said cavity (45, 45').

7. The valve assembly (1,101) according to anyone of the preceding claims, wherein the body (8, 8') of the shutter (7, 7') comprises a plurality of portions (48a, 48b; 48a', 48b') defining a lateral opening (52, 52') for the passage of said substantially lip-shaped portion.

8. The valve assembly (1,101) according to claim 7, wherein said lateral opening (52, 52') for the passage of said substantially lip-shaped portion is formed at a center-line plane (II) of the body (8, 8') of the shutter (7, 7').

9. The valve assembly (1,101) according to claim 7, further comprising fixing means for fixing each of said portions (48a, 48b; 48a', 48b') of the body (8, 8') of the shutter (7, 7') to a respective stem (17, 17') for moving the shutter (7, 7').

10. The valve assembly (1,101) according to claim 7, wherein said body (46, 46') made of an elastically deformable material is partially received in the hollow shell (44, 44') with interference in a region proximal to said lateral opening (52, 52') and loosely in a region distal with respect to said lateral opening (52, 52').

11. The valve assembly (1,101) according to claim 1, wherein said substantially lip-shaped portion comprises a pair of walls (60, 61) inclined in directions forming a predetermined angle with respect to the center-line plane of the body (46, 46') made of an elastically deformable material and connected to a joining wall (62) arranged in a direction substantially perpendicular to said center-line plane of the body (46, 46').

12. The valve assembly (1,101) according to claim 1, wherein said substantially lip-shaped portion cooperates in abutting relationship with said at least one valve seat (43, 6c) at said at least one fluid inlet conduit (3).

13. The valve assembly (1,101) according to claim 11 or 12, wherein said substantially lip-shaped portion cooperates in abutting relationship with said at least one valve seat (43, 6c) along a sealing direction forming an angle of between about 30° and about 60° with the direction (X-X) of movement of said shutter (7, 7').

14. The valve assembly (1,101) according to claim 1, wherein said shutter (7, 7') further comprises a modulating region, distinct from said sealing region, intended to progressively close said at least one fluid outlet conduit (4, 5) so as to allow a modulation of the flow rate of the fluid flowing out from said at least one fluid outlet conduit (4, 5).

15. The valve assembly (1,101) according to claim 14, wherein said modulating region comprises at least one lateral portion (7a, 7b; 7a', 7b') of the body (8, 8') of the shutter (7, 7').

16. The valve assembly (1,101) according to claim 15, wherein said at least one lateral portion (7a, 7b; 7a', 7b') of the body (8, 8') of the shutter (7, 7') is substantially frusto-conical or curvilinear.

17. The valve assembly (1,101) according to claim 1, wherein said valve body (2) comprises a substantially cylindrical central sliding chamber (6) of the shutter (7) including at least one portion having a diameter substantially equal to the maximum diameter of said shutter measured at said sealing element (47).

18. A shutter (7, 7') for a valve assembly (1, 101) for heating systems and water-heating apparatuses, comprising a body (8, 8') made of a substantially undeformable material and a sealing element (47, 47') adapted to cooperate in abutting relationship with at least one valve seat (43, 6c) defined in said valve assembly (1, 101), **characterised in that** said sealing element (47, 47') comprises a substantially lip-shaped portion radially extending from and being integral with a body (46, 46') made of an elastically deformable material received in a cavity (45, 45') defined in the body (8, 8') of said shutter (7, 7'), said substantially lip-shaped portion laterally protruding from said shutter (7, 7') for a portion of predetermined length.

19. The shutter (7, 7') according to claim 18, wherein the body (8, 8') of the shutter (7, 7') is substantially constituted by a hollow shell (44, 44') made of a substantially undeformable material and wherein said cavity (45, 45') for receiving the body (46, 46') made of an elastically deformable material is defined in said shell (44, 44').

20. The shutter (7, 7') according to any one of claims 18-19, wherein the body (8, 8') of the shutter (7, 7') comprises a plurality of portions (48a, 48b; 48a', 48b') defining a lateral opening (52, 52') for the passage of said substantially lip-shaped portion.

21. The shutter (7, 7') according to claim 20, wherein said lateral opening (52, 52') for the passage of said substantially lip-shaped portion is formed at a center-line plane (II) of the body (8, 8') of the shutter (7, 7').

22. The shutter (7, 7') according to claim 20, further comprising fixing means for fixing each of said portions (48a, 48b; 48a', 48b') of the body (8, 8') of the shutter (7, 7') to a respective stem (17, 17') for moving the shutter (7, 7').

23. The shutter (7, 7') according to claim 20, wherein said body (46, 46') made of an elastically deformable material is partially received in the hollow shell (44, 44') with interference in a region proximal to said lateral opening (52, 52') and loosely in a region distal with respect to said lateral opening (52, 52').

24. The shutter (7, 7') according to claim 18, wherein said substantially lip-shaped portion comprises a pair of walls (60, 61 ) inclined in directions forming a predetermined angle with respect to the center-line plane of the body (46, 46') made of an elastically deformable material and connected to a joining wall (62) arranged in a direction substantially perpendicular to said center-line plane of the body (46, 46').

25. The shutter (7, 7') according to claim 18, further comprising a modulating region, distinct from said sealing region, intended to progressively close a fluid outlet conduit (4, 5) of the valve assembly (1, 101) so as to allow a modulation of the flow rate of the fluid flowing out from said at least one fluid outlet conduit (4, 5).

26. The shutter (7, 7') according to claim 25, wherein said modulating region comprises at least one lateral portion (7a, 7b; 7a', 7b') of the body (8, 8') of the shutter (7, 7').

27. The shutter (7, 7') according to claim 26, wherein said at least one lateral portion (7a, 7b; 7a', 7b') of the body (8, 8') of the shutter (7, 7') is substantially frusto-conical or curvilinear.

28. A method for manufacturing a shutter (7, 7') according to any one of claims 18-27, comprising the steps of:
a) providing a body (46, 46') made of an elastically deformable material;
b) providing a plurality of portions (48a, 48b; 48a', 48b') of a body (8, 8') made of a substantially undeformable material of the shutter (7, 7'), said portions (48a, 48b; 48a', 48b') being provided with a recess adapted to define a cavity (45, 45') in said body (8, 8');
c) inserting the body (46, 46') made of an elastically deformable material in said cavity (45, 45') of the body (8, 8') of the shutter (7, 7');
d) optionally subjecting said body (46, 46') made of an elastically deformable material to compression in the axial and radial directions; and
e) associating said portions (48a, 48b; 48a', 48b') of the body (8, 8') of the shutter (7, 7') to said body (46, 46') made of an elastically deformable material and to a stem (17, 17') for moving the shutter (7, 7'), optionally compressing said body (46, 46') made of an elastically deformable material along said axial and radial directions.

29. A water-heating apparatus for generating hot water for sanitary use and/or for space heating **characterised in that** it comprises a valve assembly (1, 101) according to any one of claims 1-17.
